# EUROPÄISCHE PATENTANMELDUNG

(11) **EP 1 091 555 A2**
(43) Veröffentlichungstag der Anmeldung: **11.04.2001**
(21) Anmeldenummer: 00119843.1
(22) Anmeldetag: 12.09.2000
(51) Int. Cl.: H04M 15/00

(54) **Verfahren zur Erfassung gesprächsabhängiger Daten von Vermittlungseinrichtungen sowie Anordnung**

(30) Priorität: 06.10.1999 DE 19948023
(71) Anmelder: Tenovis GmbH & Co. KG, 60326 Frankfurt (DE)
(72) Erfinder: Scheerer, Ulrich, 64807 Dieburg (DE); Kalunka, Berthold, 61231 Bad Nauheim (DE)
(74) Vertreter: Wilhelm, Jürgen, Dipl.-Phys.

(57) **Zusammenfassung**

Zur Erfassung gesprächsabhängiger Daten werden diese in den einzelnen Vermittlungseinrichtungen (2, 3, 4) zwischengespeichert und auf Veranlassung einer Zentrale (1) zu dieser übermittelt und abgespeichert.

Eine eigene Gebührendatenverwaltung in den Vermittlungseinrichtungen (2, 3, 4) wird dadurch entbehrlich.

## Beschreibung

### Stand der Technik

Bei Vermittlungseinrichtungen (PABX) als Bestandteil von Kommunikationsanlagen fallen bei Externverbindungen Gebühren an. Diese werden von der Vermittlungseinrichtung einer Gesprächsdatenverwaltung zur Verfügung gestellt. Jede Vermittlungseinrichtung hat eine eigene Gesprächsdatenverwaltung.

### Vorteile der Erfindung

Mit den Maßnahmen der Ansprüche 1 oder 10 können gesprächsabhängige Daten, insbesondere Gebührendatensätze, zu einer Zentrale zu beliebigen Zeitpunkten übermittelt werden. Eine eigene Gebührendatenverwaltung in den einzelnen Vermittlungseinrichtungen kann somit entfallen. Es ist nur noch eine Gesprächsdatenverwaltung notwendig, um die gesprächsabhängigen Daten von beliebig vielen Kommunikationsanlagen (Vermittlungseinrichtungen) zu verwalten.

Die Maßnahmen der Unteransprüche zeigen vorteilhafte Ausgestaltungen auf. Mit den Maßnahmen des Anspruchs 2 können gesprächsabhängige Daten, die während einer Übermittlung von gesprächsabhängigen Daten zur Zentrale neu eintreffen oder anfallen, zwischengespeichert werden, ohne daß der reguläre Betrieb gestört wird. Wenn die Übermittlung der zuvor zwischengespeicherten Daten beendet ist, können die neu eintreffenden oder anfallenden gesprächsabhängigen Daten unmittelbar im Anschluß übermittelt werden (Anspruch 3). Damit werden die in der Zentrale abgespeicherten Daten schnell aktualisiert.

Da die Übermittlung der gesprächsabhängigen Daten von der Zentrale veranlaßt wird und von ihr nach Anspruch 7 auch die Zeitdauer der Übermittlung bestimmt wird, kann die Verbindung beliebig unterbrochen werden, ohne daß Daten für die Zentrale verlorengehen. Nach einer Unterbrechung oder nach Ablauf der Zeitdauer wird die Übermittlung gesprächsabhängiger Daten an der Stelle fortgesetzt, wo sie zuletzt beendet wurde.

### Zeichnungen

Anhand der Zeichnung werden Ausführungsbeispiele der Erfindung näher erläutert.

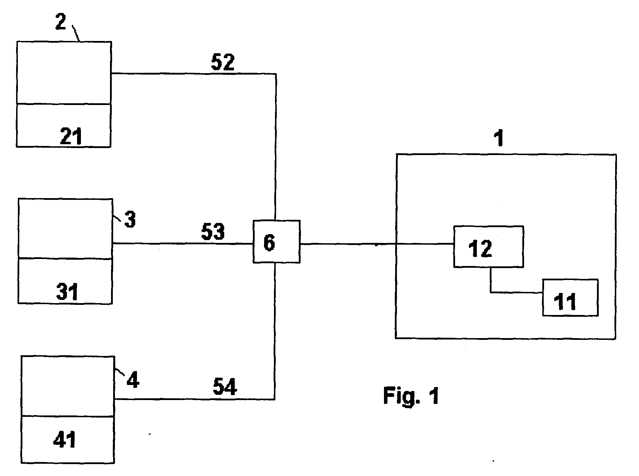

Figur 1 zeigt ein Blockschaltbild zur Erfassung gesprächsabhängiger Daten einer Mehrzahl von Vermittlungseinrichtungen.

### Beschreibung von Ausführungsbeispielen

Wie Figur 1 zeigt, ist eine Mehrzahl von Vermittlungseinrichtungen 2, 3 und 4, im Ausführungsbeispiel sind nur drei Vermittlungseinrichtungen dargestellt, mit einer Zentrale 1 über entsprechende Kommunikationsleitungen 52, 53, 54 verbunden. Diese Kommunikationsleitungen 52, 53, 54 können einzeln zur Zentrale geführt sein oder, wie das Ausführungsbeispiel zeigt, über einen Multiplexer 6 zusammengefaßt werden. Es können natürlich sowieso bestehende Kommunikationswege zwischen den Vermittlungseinrichtungen und der Zentrale benutzt werden, insbesondere wenn die Zentrale 1 als Service-Zentrum innerhalb eines Verbundes von Vermittlungseinrichtungen ausgestaltet ist. Die Zentrale 1 kann auch insbesondere über Leitungen mit der ISDN-Welt verbunden sein und dadurch mit mehreren externen Vermittlungseinrichtungen in Verbindung stehen.

Wenn in den Vermittlungseinrichtungen 2, 3, 4 Gesprächsdatensätze neu eintreffen oder anfallen, können, insbesondere mit der Steuersoftware OLT (Offline Transfer of Accounting Data), diese Gesprächsdatensätze von der Vermittlungseinrichtung entgegengenommen werden und auf die Festplatte 21, 31, 41 der jeweiligen Vermittlungseinrichtung 2, 3, 4 insbesondere in eine erste Datei (File), d. h. in einen Speicherbereich auf der jeweiligen Festplatte geschrieben und dort zwischengespeichert werden. Wird eine Verbindung von einer Gebührendatenverwaltung (GDV), die der Zentrale 1 zugeordnet ist, zur OLT aufgebaut, beginnt die OLT die zwischengespeicherten Gesprächsdatensätze einzeln von der Festplatte zu lesen, um sie dann, insbesondere in chronologischer Reihenfolge, zur Gebührendatenverwaltung der Zentrale 1 zu übermitteln. In der Zentrale 1 ist eine entsprechende Zugriffssteuerung 12 vorgesehen, die die Übermittlung der gesprächsabhängigen Daten von den einzelnen Vermittlungseinrichtungen 2, 3, 4 hinsichtlich Zeitpunkt und Dauer der jeweiligen Übermittlung steuert. Die übermittelten gesprächsabhängigen Daten werden in der Zentrale 1 in Speichermitteln 11 gespeichert und können für Abrechnungszwecke ausgewertet werden.

Treffen zwischenzeitlich, d.h. während der Übermittlung gesprächsabhängiger Daten von beispielsweise der Vermittlungseinrichtung 2 bei dieser Vermittlungseinrichtung 2 neu ein bzw. fallen an, werden diese bei der Speicherung auf der Festplatte 21 besonders gekennzeichnet oder in eine zweite Datei bzw. in weiteren Dateien, insbesondere Hintergrunddateien, auf der Festplatte 21 abgelegt. Im Anschluß an die Übermittlung der Gesprächsdatensätze der ersten Datei (Speicherbereich auf der Festplatte) erfolgt dann die Übermittlung des Inhaltes der zweiten/weiteren Datei/en, bzw. der besonders gekennzeichneten gesprächsabhängigen Daten. Neue Gesprächsdaten, die während der Übermittlung der zweiten Datei/weiteren Dateien eintreffen, werden wieder in die erste Datei abgelegt, bzw. können ohne besondere Kennzeichnung abgelegt werden. Für die Übermittlung der gesprächsabhängigen Daten wird solange zwischen den Dateien gewechselt, bzw. zwischen besonders gekennzeichneten und nicht gekennzeichneten gesprächsabhängigen Daten, bis alle gesprächsabhängigen Daten einer Vermittlungseinrichtung ausgegeben bzw. zur Zentrale 1 übermittelt wurden. Danach können neu eintreffende Gebührendatensätze direkt zur Gebührendatenverwaltung in der Zentrale 1 übermittelt werden. Die Gebührendatenverwaltung hat jederzeit die Möglichkeit die verbindung über die Zugriffssteuerung 12 zu unterbrechen. Nach einem erneuten Verbindungsaufbau - GDV/OLT- wird mit der Übermittlung gesprächsabhängiger Daten dort fortgefahren, wo sie zuletzt beendet wurde. Auf diese Weise kann auch eine Aktualisierung der in der Zentrale 1 gespeicherten Daten in Zeitabständen erfolgen.

Die Erfindung gestattet nicht nur die Verwaltung von Gebührendatensätzen insbesondere für Externverbindungen. Auch sonstige gesprächsabhängigen Daten, die zentral verwaltet und ausgewertet werden sollen, können mit den Maßnahmen der Erfindung erfaßt werden, z.B. zur optimalen Auslastung der Vermittlungseinrichtungen 2, 3, 4 oder für Dokumentationszwecke, bzw. weitere personenbezogene Daten.

## Patentansprüche

1. Verfahren zur Erfassung gesprächsabhängiger Daten einer Mehrzahl von Vermittlungseinrichtungen (2, 3, 4) mit folgenden Schritten:
- die gesprächsabhängigen Daten der einzelnen Vermittlungseinrichtungen (2, 3, 4) werden in den einzelnen Vermittlungseinrichtungen insbesondere in einer ersten Datei zwischengespeichert,
- auf Veranlassung einer Zentrale (1) werden die in den Vermittlungseinrichtungen (2, 3, 4) zwischengespeicherten gesprächsabhängigen Daten zur Zentrale (1) insbesondere in chronologischer Reihenfolge übermittelt,
- die übermittelten gesprächsabhängigen Daten werden in der Zentrale (1) abgespeichert und in Zeitabständen aktualisiert.

2. Verfahren nach Anspruch 1, dadurch gekennzeichnet, daß neu eintreffende oder anfallende gesprächsabhängige Daten bei einer der Vermittlungseinrichtungen (2, 3, 4) während der Übertragung gesprächsabhängiger Daten dieser Vermittlungseinrichtung zur Zentrale (1) insbesondere in mindestens einer zweiten Datei oder mit einer besonderen Kennzeichnung zwischengespeichert werden.

3. Verfahren nach Anspruch 2, dadurch gekennzeichnet, daß die Daten in der zweiten Datei/den weiteren Dateien oder mit der besonderen Kennzeichnung im Anschluß an eine bestehende Übermittlung von gesprächsabhängigen Daten zur Zentrale (1) übermittelt werden.

4. Verfahren nach Anspruch 2 oder 3, dadurch gekennzeichnet, daß neu eintreffende oder anfallende Daten während der Übermittlung von gesprächsabhängigen Daten der zweiten Datei/den weiteren Dateien oder mit der besonderen Kennzeichnung wieder in der ersten Datei oder ohne besondere Kennzeichnung zwischengespeichert werden.

5. Verfahren nach einem der Ansprüche 2 bis 4, dadurch gekennzeichnet, daß für die Übermittlung von gesprächsabhängigen Daten zwischen der ersten und der zweiten Datei/den weiteren Dateien oder den besonders gekennzeichneten und den nicht gekennzeichneten gesprächsabhängigen Daten so lange in der Übermittlung zwischen den Dateien oder den Kennzeichnungen gewechselt wird, bis alle zwischengespeicherten gesprächsabhängigen Daten zur Zentrale (1) übermittelt wurden.

6. Verfahren nach Anspruch 5, dadurch gekennzeichnet, daß nach Abarbeitung der zwischengespeicherten Daten eine Vermittlungseinrichtung (2, 3, 4) neue Daten direkt bei Eintreffen oder Anfallen zur Zentrale (1) übermittelt werden.

7. Verfahren nach einem der Ansprüche 1 bis 6, dadurch gekennzeichnet, daß von der Zentrale (1) die Zeitdauer zur Übermittlung der gesprächsabhängigen Daten von einer Vermittlungseinrichtung (2, 3, 4) bestimmt wird.

8. Verfahren nach einem der Ansprüche 1 bis 7, dadurch gekennzeichnet, daß nach einer Verbindungsunterbrechung oder nach Ablauf der von der Zentrale (1) vorgegebenen Zeitdauer zur Übermittlung gesprächsabhängiger Daten die Übermittlung restlicher gesprächsabhängiger Daten an der Stelle fortgesetzt wird, wo sie zuletzt beendet wurde.

9. Verfahren nach einem der Ansprüche 1 bis 8, dadurch gekennzeichnet, daß als gesprächsabhängige Daten Gebührendatensätze für Externverbindungen der einzelnen Vermittlungseinrichtungen (2, 3, 4) zur Zentrale (1) übermittelt werden.

10. Anordnung zur Erfassung gesprächsabhängiger Daten einer Mehrzahl von Vermittlungseinrichtungen (2, 3, 4) insbesondere zum Durchführen des Verfahrens nach einem der Ansprüche 1 bis 9 mit folgenden Merkmalen:
- die einzelnen Vermittlungseinrichtungen (2, 3, 4) weisen Speichermittel (21, 31, 41) für die Zwischenspeicherung gesprächsabhängiger Daten auf,
- die Zentrale (1) weist Speichermittel (11) zur Speicherung der von den einzelnen Vermittlungseinrichtungen (2, 3, 4) übermittelten gesprächsabhängigen Daten auf,
- in der Zentrale (1) ist eine Zugriffssteuerung (12) vorgesehen zur Übermittlung der gesprächsabhängigen Daten der einzelnen Vermittlungseinrichtungen (2, 3, 4) insbesondere in chronologischer Reihenfolge und zur Aktualisierung der übermittelten gesprächsabhängigen Daten.

11. Anordnung nach Anspruch 10, dadurch gekennzeichnet, daß die Speichermittel (21, 31, 41) in den Vermittlungseinrichtungen (2, 3, 4) Festplatten sind.

12. Anordnung nach einem der Ansprüche 10 oder 11, dadurch gekennzeichnet, daß mindestens zwei unterschiedliche Speicherbereiche für gesprächsabhängige Daten in den Speichermitteln (21, 31, 41) vorgesehen sind zur Zwischenspeicherung neu eintreffender oder anfallender gesprächsabhängiger Daten im jeweils anderen Speicherbereich, wenn gesprächsabhängige Daten von jeweils einem Speicherbereich zur Zentrale (1) übermittelt werden.

13. Anordnung nach einem der Ansprüche 10 bis 12, dadurch gekennzeichnet, daß die Zentrale (1) ein Service-Zentrum innerhalb eines Verbundes von Vermittlungseinrichtungen (2, 3, 4) darstellt und die Speichermittel (11) eine zentrale Gebührendatenverwaltung bilden.

14. Anordnung nach einem der Ansprüche 10 bis 12, dadurch gekennzeichnet, daß die Zentrale (1) über ISDN-Verbindungen mit mehreren externen Vermittlungseinrichtungen (2, 3, 4) in Verbindung steht.
